# DEMANDE DE BREVET EUROPEEN

(11) **EP 3 182 713 A1**
(43) Date de publication de la demande: **21.06.2017**
(21) Numéro de dépôt: 16203983.8
(22) Date de dépôt: 14.12.2016
(51) Int. Cl.: H04N 21/2347, H04N 21/81

(54) **PROCEDE, DECODEUR ET SYSTEME DE TRANSMISSION VIDEO SECURISE RECONFIGURABLE POUR CHIFFREMENT SELECTIF**

(30) Priorité: 18.12.2015 FR 1502639
(71) Demandeur: Thales, 92400 Courbevoie (FR)
(72) Inventeur: BERGERON, Cyril, 92622 GENNEVILLIERS CEDEX (FR); ROUÉ, Benoît, 92622 GENNEVILLIERS CEDEX (FR); BOYADJIS, Benoît, 92622 GENNEVILLIERS CEDEX (FR)
(74) Mandataire: Dudouit, Isabelle

(57) **Abrégé**

L'invention concerne un procédé de transmission vidéo sécurisé dans un système comportant au moins un décodeur de type RVC (50) recevant un flux de données chiffrées F caractérisé en ce qu'il comporte au moins les étapes suivantes : au niveau de l'étape de déchiffrement, pour chaque clé de chiffrement Kp et pour chaque vecteur d'initialisation utilisés V pour le chiffrement d'un flux de données, à partir d'une description du flux de données, un modèle d'instanciation (56) à partir d'outils de codage FUs, au sein du décodeur et des bits reconnus comme chiffrés, reconfigurer ce modèle afin de décoder le flux de données chiffrées.

## Description

L'invention concerne un procédé et un système de transmission comprenant un codeur/décodeur reconfigurable pour les flux vidéo sécurisés, ou RVC abrégé anglo-saxon de « Reconfigurable Video Coding », afin d'assurer le décodage et le déchiffrement de flux de données vidéo reçus. Elle concerne le domaine des standards de compression de flux vidéo, en particulier celui des standards utilisant des codeurs entropiques, ainsi que le domaine du chiffrement de flux vidéo compressés selon des standards connus de l'homme du métier, par exemple les standards H.264 et HEVC (High Efficiency Video Coding).

Dans le cadre d'échanges de contenus vidéo confidentiels, un objectif est de limiter l'accès au contenu visuel de flux vidéo à certains utilisateurs autorisés et de rendre l'accès plus difficile à d'autres utilisateurs non autorisés. Ceci peut être réalisé en introduisant une dégradation visuelle de l'image par l'intermédiaire d'un mécanisme de chiffrement. Le destinataire doit être en mesure de décoder, de déchiffrer le flux vidéo reçu et de fait, le décodeur doit être adapté à réaliser cette fonction.

Certaines solutions de chiffrement sélectif, comme celle qui est proposée dans le brevet US8160157, nécessitent une modification des implémentations de codeurs (ou décodeurs) vidéos, puisque ces solutions chiffrent les données au niveau du codeur (respectivement du décodeur) entropique. Les codeurs (respectivement les décodeurs) entropiques modifiés doivent gérer une entrée supplémentaire pour leur fonctionnement. Ceci leur permet de chiffrer (ou déchiffrer) les flux de données grâce à un générateur de bits pseudo-aléatoire, par exemple le mécanisme de chiffrement asymétrique AES (Avdanced Encryption Standard) connu de l'homme du métier. Cette méthode est intéressante mais présente l'inconvénient de devoir modifier les dispositifs, notamment le décodeur pour parvenir à déchiffrer les flux vidéo.

Lors du développement d'un codeur ou d'un décodeur présentant de nouvelles fonctionnalités, tel que le chiffrement sélectif, il n'est pas aisé de modifier ce type d'implémentation car les briques logicielles modifiées vont directement impacter l'efficacité de l'implémentation d'un point de vue de la mémoire utile et du parallélisme. De plus, et c'est l'une des propriétés du chiffrement sélectif, la partie sécurisée (chiffrement) est intimement liée au codeur ou au décodeur vidéo. Une modification d'un codeur ou d'un décodeur existant peut être détectée par rétro-ingénierie logicielle ce qui permet d'avoir accès à l'algorithme de chiffrement. En outre, dans une application recherchant la confidentialité de l'information, il est intéressant de pouvoir modifier régulièrement et dynamiquement les algorithmes de chiffrement afin de pallier à des attaques cryptanalytiques. Le concept de programmation par flux de données consiste à décrire une application comme une série de modules qui implémentent les fonctionnalités unitaires ou FU et un graphe dont les arêtes représentent le flux de données entre les modules. Le modèle de flux de données appelle ces fonctionnalités unitaires FU ou acteurs traitant une tâche à exécuter.

La publication de Junaid Jameel Ahmad et al, intitulé « Crypto Tools Library (CTL) : Applying RVC-CAL for Multimedia Security Applications », 94.MPEG Meeting; XP030046994, décrit le développement d'un outil basé sur le langage RVC-CAL.

Le document de Shujun Li et al, intitulé « Extending RVC for Wireless Multimedia Sensor Networks and Cryptography Applications », 90.MPEG Meeting, XP030045579 divulgue un procédé permettant de reconfigurer des codeurs/décodeurs en utilisant le langage RVC.

Le procédé selon l'invention repose notamment sur l'utilisation d'une étape préalable au niveau de l'étape de déchiffrement ayant notamment pour fonction de déchiffrer le flux de données en cours de lecture, avant sa transmission au module de décompression qui permet de retrouver les informations initiales. L'objet de la présente invention concerne notamment la partie décodage entropique qui va être modifiée pour tenir compte du contexte et d'une entrée de pseudo-aléa afin de générer un modèle d'instanciation au niveau du décodeur de type RVC utilisé pour décoder le flux de données chiffrées.

L'invention concerne un procédé de transmission vidéo sécurisé dans un système comportant au moins un décodeur de type reconfigurable recevant un flux de données chiffrées Fc caractérisé en ce qu'il comporte au moins les étapes suivantes : au niveau de l'étape de déchiffrement, pour chaque clé de chiffrement Kp et pour chaque vecteur d'initialisation utilisés V pour le chiffrement d'un flux de données, à partir d'une description du flux de données, générer un modèle d'instanciation à partir d'outils de codage FUs, au sein du décodeur et des bits reconnus comme chiffrés, reconfigurer ce modèle d'instanciation afin de générer un algorithme de déchiffrement et déchiffrer le flux de données chiffrées.

Le procédé comporte, par exemple, une étape préalable de chiffrement par groupes d'images du flux de données et pour chaque groupe d'image et pour chaque vecteur d'initialisation V associé au groupe d'images, et pour chaque groupe d'images la génération d'un module d'instanciation.

Le procédé peut mette en oeuvre un modèle de chiffrement associé à la norme H.264 ou encore un modèle de chiffrement associé à la norme HEVC.

L'invention concerne aussi un décodeur de type reconfigurable recevant un flux de données chiffrées Fc et comprenant une première entrée recevant la description DF du flux de données F qui transmet cette information à un module d'implémentation des unités fonctionnelles, une deuxième entrée recevant une clé de chiffrement Kp utilisée pour un chiffrement sélectif du flux de données, une troisième entrée recevant un vecteur d'initialisation pour le déchiffrement sélectif du flux de données, caractérisé en ce que ledit décodeur comporte un module de déchiffrement adapté à prendre en compte lors du décodage des bits susceptibles d'être chiffrés en fonction du vecteur d'initialisation et de la clé de chiffrement, et à instancier un modèle d'instanciation, à partir de la description des unités fonctionnelles utilisées par ce flux de données et de leur implémentation, et des modules de déchiffrement sélectif prenant en compte les bits reconnus comme chiffrés, ledit modèle d'instanciation est transmis à un module de recompilation afin de générer un code logiciel utilisé comme décodeur vidéo déchiffrant qui reçoit en entrée le flux de données F à déchiffrer et qui reconstituera alors une vidéo déchiffrée Fd.

L'invention concerne aussi un système comprenant un décodeur selon l'invention et un codeur de type H.264 ou encore un système comprenant un décodeur et un codeur de type HEVC.

D'autres caractéristiques et avantages du procédé selon l'invention apparaîtront mieux à la lecture de la description qui suit d'exemples de réalisation donnés à titre illustratif et nullement limitatif annexée des figures qui représentent :
- Figure 1, un rappel de fonctionnement du schéma RVC connu de l'art antérieur,
- Figure 2, une illustration visuelle de la prédiction intra 4*4 dans le standard H.264,
- Figure 3, une illustration de blocs courants et adjacents pour le standard H.264,
- Figure 4, un exemple de chiffrement de bits, et
- Figure 5, un schéma de mise en oeuvre du procédé selon l'invention.

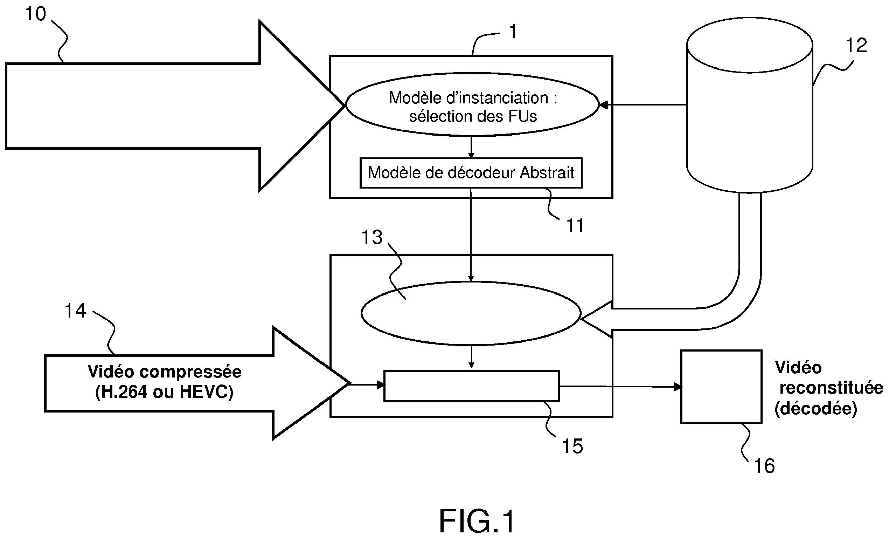

Afin de mieux faire comprendre le procédé mis en oeuvre dans la présente invention, l'exemple qui suit est donné à titre illustratif et nullement limitatif au cas d'un décodage de flux vidéo de norme H.264, mais peut aussi se généraliser à un codeur H.264 et/ou à d'autres normes de compression Vidéo (HEVC,...). Quelques rappels sur le fonctionnement d'un décodeur reconfigurable RVC vont être donnés avec l'exemple de la figure 1.

La figure 1 schématise un exemple d'architecture d'un décodeur reconfigurable RVC. Un décodeur vidéo RVC peut être vu comme un ensemble de composants logiciels, par exemple d'outils logiciels ayant notamment pour fonction de décoder un flux vidéo reçu. Le décodeur 1 est décrit 10, notamment par son langage réseau ou FNL et par sa syntaxe, c'est-à-dire, l'ordre et la manière dont les différents symboles codés sont transmis. Une traduction est ensuite effectuée à partir d'un modèle de décodeur au niveau abstrait 11 qui varie en fonction des standards et qui s'appuie sur une base d'unités fonctionnelles FU, 12, vers un code prêt à être compilé en fonction des outils de décodage et de leur implémentation disponible sur la cible choisie, plateforme matérielle ou logicielle 13. Le flux de données vidéo compressées 14 selon le standard H.264 ou HEVC est alors décodé à l'aide de la solution ou algorithme de décodage 15 afin de fournir une vidéo reconstituée 16. Les algorithmes de décodage représentent une instanciation d'un outil de codage, l'unité fonctionnelle ou FU, qui sera sélectionnée parmi une bibliothèque d'outils normalisés. Sur réception d'un flux H.264, le décodeur va chercher la FU pour décoder le flux, image par image par exemple. Selon le procédé de l'art antérieur, il y a une seule instanciation pour un flux de données reçu et le procédé va ensuite décoder image par image le flux.

L'idée de la présente invention repose notamment sur une modification du décodeur qui consiste à lui adjoindre un module dont la fonction est de déchiffrer le flux de données chiffrées de manière sélective avant d'appeler l'unité fonctionnelle, et d'instancier pour chaque vecteur d'initialisation IV utilisé au niveau du chiffrement du flux de données un modèle unique de décodeur. En effet, l'homme du métier sait que l'unicité du vecteur d'initialisation utilisé pour le chiffrement est un facteur déterminant d'un point de vue sécurité contre les attaques cryptanalytiques. De cette façon, à chaque instance du décodeur, ce dernier génère un modèle unique pour décoder le flux de données en fonction de chaque Vecteur d'initialisation et de chaque clé de chiffrement. Les unités FUs du décodage vidéo sont modifiées de manière dynamique en fonction de la clé de chiffrement et des Vecteurs d'initialisation, c'est-à-dire des blocs de décompression. Le procédé selon l'invention repose notamment sur les outils mis à disposition dans le standard vidéo RVC qui, grâce à sa modélisation en graphe de flux de données, facilite le portage sur des plateformes, tant matérielles que logicielles, des algorithmes de compression afin de construire dynamiquement des codeurs ou des décodeurs modulaires. Par exemple, un des standards connus de l'art antérieur est le standard MPEG RVC. Sans sortir du cadre de l'invention, tout standard de compression permettant l'ajout d'un module supplémentaire de chiffrement selon l'invention pourra mettre en oeuvre le procédé selon l'invention.

Dans l'exemple donné pour illustrer l'invention, le flux vidéo est constitué de bits chiffrés de manière sélective et il est reconnu comme un flux chiffré de manière sélective au niveau du décodeur. Dans le cas du chiffrement sélectif, la plupart des fonctionnalités unitaires sont communes à celles utilisées par les décodeurs standards. Le codeur entropique est, par exemple, un codeur de type H.264 avec les symboles nommés « rem_intra_pred » contenant l'information permettant d'appliquer une prédiction intra à partir des pixels adjacents de blocs précédemment reconstitués.

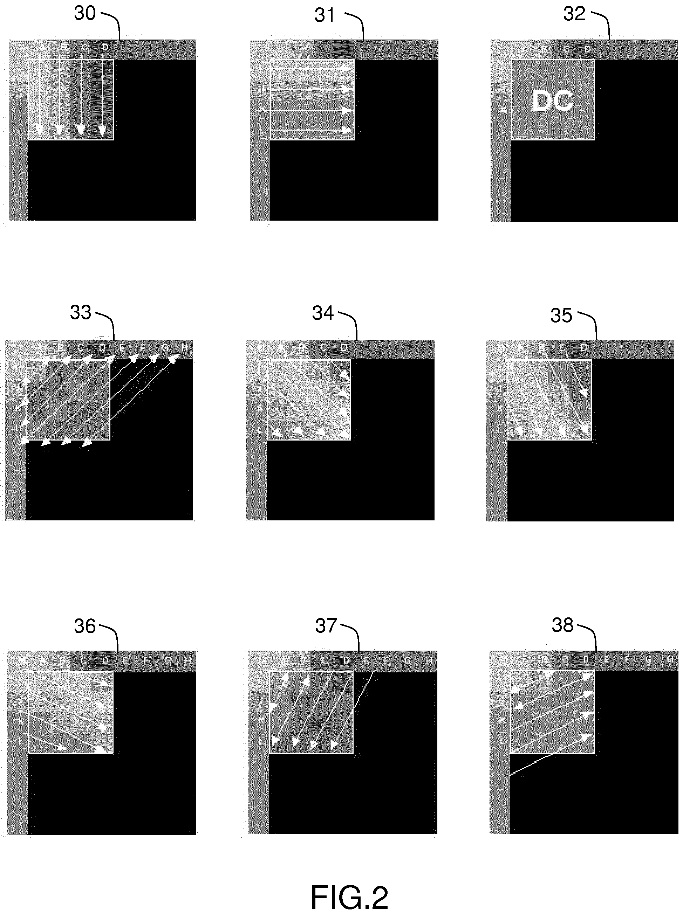

La figure 2 est une illustration visuelle de la prédiction Intra 4*4 dans le standard H.264 avec les neuf modes repris dans la table 1, 30 mode 0 : vertical, 31 mode 1 : horizontal, 32 mode 2 : DC, 33 mode 3 : Diagonal Bas gauche, 34 mode 4 : Diagonal Bas droite, 35 mode 5 : Diagonal Vertical droit, 36 mode 6 : Diagonal Horizontal bas, 37 mode 7 : Diagonal Vertical gauche, 38 mode 8 : Diagonal Horizontal haut.

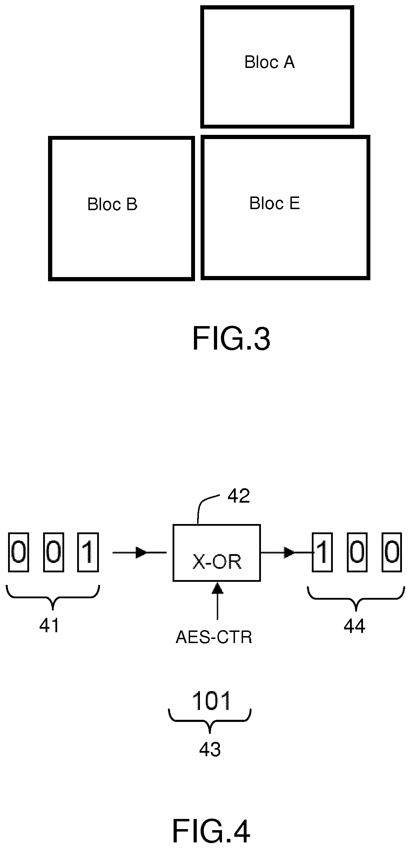

La figure 3 illustre les blocs courants et adjacents dans le standard H.264, permettant de déterminer les paramètres de codage à appliquer, A est par exemple le bloc courant, B le bloc adjacent et déterminer le mode par défaut E= min(A, B).

La table 1 présente les neuf modes de prédiction Intra 4*4 présents dans la norme H264. Si le mot de code Type du macro-block (Mb-type) indique que l'on est en mode Intra 4*4 alors le mode prédit Intra 4*4 est codé pour chacun des seize blocs du macrobloc.

**Table 1**

| | |
|---|---|
| 0 | Vertical |
| 1 | Horizontal |
| 2 | DC |
| 3 | Diagonal Bas gauche |
| 4 | Diagonal Bas droite |
| 5 | Diagonal Vertical droit |
| 6 | Diagonal Horizontal bas |
| 7 | Diagonal Vertical gauche |
| 8 | Diagonal Horizontal haut |

Le mode de prédiction pour un bloc Intra 4*4 codé est représenté comme suit :
Le paramètre prev_intra4x4_pred_mode_flag vaut:
   - '1' si la valeur à utiliser est la valeur par défaut dérivée du contexte,
   - '0' si un mode de prédiction différent est utilisé.
Le paramètre rem_intra4x4_pred_mode vaut :
   - 'xxx' (mot de longueur fixe = 3 bits) dont le fonctionnement est explicité ci-dessous.

Le mode par défaut du mode de prédiction, représenté par Pred_E pour le bloc courant Bloc E figure 4 est donné par :
- Pred_E = min(Pred_A, Pred_B) si le bloc adjacent situé à gauche du bloc courant et le bloc adjacent situé en dessus du bloc courant (bloc E ?) sont codés Intra 4*4 ;
- Pred_E = mode 2 (Prédiction _DC) autrement.

Pour un mode différent du mode par défaut, on élimine du jeu des valeurs possibles données dans la table 2 le mode par défaut. On obtient ainsi une table réduite de huit valeurs, qui permet de coder le mode Intra par trois bits (rem_intra4x4_pred_mode), comme il est illustré avec l'exemple du mode par défaut mode 2 (DC) qui est éliminé table 2.

**Table 2**

| | mode considéré | étiquette sans le mode par défaut | Bits codés |
|---|---|---|---|
| 0 | Vertical | 0 | 000 |
| 1 | Horizontal | 1 | 001 |
| 3 | Diagonal Bas gauche | 2 | 010 |
| 4 | Diagonal Bas droite | 3 | 011 |
| 5 | Diagonal Vertical droit | 4 | 100 |
| 6 | Diagonal Horizontal bas | 5 | 101 |
| 7 | Diagonal Vertical gauche | 6 | 110 |
| 8 | Diagonal Horizontal haut | 7 | 111 |

La table 2 donne ainsi un exemple de méthode pour déterminer les bits codés pour le mode de prédiction Intra. Le mode par défaut DC est exclu pour trouver les autres possibilités. Pour le mode horizontal, les bits codés sont les bits '001' conduisant au mot de code '0001'.

Il est impossible de chiffrer le paramètre prev_intra4x4_pred_mode_flag, car c'est de lui que dépend la gestion ou non des trois bits de rem_intra4x4_pred_mode. Les trois bits décrivant le mode sont en revanche des candidats au chiffrement. Ces trois bits seront modifiés en utilisant par exemple une séquence de bits générée de manière pseudo-aléatoire selon un algorithme de type AES-CTR, la séquence sera ensuite combinée selon un mécanisme XOR aux trois bits à chiffrer. Dans l'exemple de la figure 4, la séquence 001, 41 est combinée 42 avec une séquence aléatoire 101, 43 selon un mécanisme XOR, ou exclusif qui permet le chiffrement bit à bit, pour générer les bits 100, 44.

Afin d'assurer une compatibilité totale ou quasi-totale avec le standard H.264, certains blocs ne seront pas utilisés pour le chiffrement. En effet, certains modes de prédiction possibles de prédiction Intra 4*4 ne seront pas autorisés pour les blocs se trouvant sur les bords des tranches d'images ou « slices » en anglo-saxon. Les symboles correspondants peuvent être chiffrés uniquement si les blocs adjacents sont présents dans la même « slice », i.e, entité indépendante de codage. Les implémentations de FUs et le séquencement au niveau mis en place par le décodeur au niveau abstrait tiennent compte de cette contrainte, selon des principes connus de l'homme du métier.

Dans le cas où les deux blocs adjacents sont présents, il est possible d'appliquer l'opération de déchiffrement utilisant une nouvelle FU adaptée permettant, d'une part d'effectuer le déchiffrement en utilisant une séquence pseudo-aléatoire calculée à partir d'une clé et du vecteur d'initialisation (ou IV « Initialisation Vector ») et, d'autre part, la reconstruction partielle du bloc à partir du symbole reconstitué.

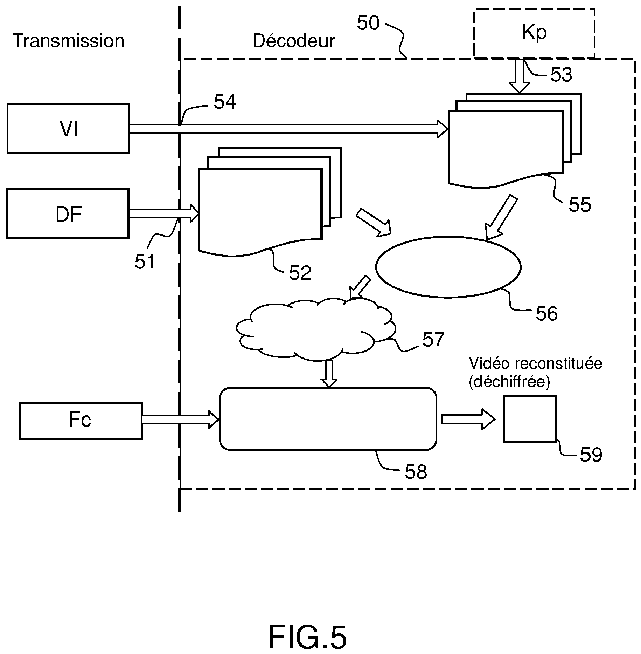

La figure 5 illustre une architecture de décodeur selon l'invention comportant un module adapté à recréer dynamiquement une nouvelle instance, en fonction des clés de chiffrement Kp et des vecteurs d'initialisation V et, à partir de FU provenant d'une part d'un ensemble standard et d'autre part d'un nouvel ensemble prenant en compte l'aspect cryptographique adapté au chiffrement sélectif, et en générant un code exécutable permettant de décoder le flux de données.

Le décodeur RVC selon l'invention, 50, comprend une première entrée 51 recevant la description DF du flux de données F qui transmet cette information à un module d'implémentation des FUs 52, au sein du décodeur RVC. Il comprend aussi une deuxième entrée 53 qui reçoit la clé de chiffrement Kp utilisée pour le chiffrement sélectif du flux de données, une troisième entrée 54 qui reçoit le vecteur d'initialisation V utilisé pour le déchiffrement sélectif du flux de données, ces deux informations sont transmises à un module de déchiffrement sélectif 55 afin de prendre en compte lors du décodage des bits susceptibles d'être chiffrés en fonction du vecteur d'initialisation et de la clé de chiffrement. Le décodeur va instancier un modèle d'instanciation 56 à partir de la description des FUs utilisés par ce flux de données et de leur implémentation, mais aussi des modules de déchiffrement sélectif prenant en compte les bits reconnus comme chiffrés. Le modèle d'instanciation 56 est transmis à un module de recompilation 57 afin de générer un code logiciel qui deviendra le décodeur vidéo déchiffrant 58 qui reçoit en entrée le flux de données F à déchiffrer et qui reconstituera alors une vidéo déchiffrée Fd 59.

Le décodeur selon l'invention sera ainsi capable de déchiffrer sélectivement et donc de reconstituer le flux de données originellement transmis. Il ne sera valide que pour une clé Kp et un vecteur d'initialisation V donné, et à chaque transmission d'un nouveau vecteur d'initialisation V' ou d'une nouvelle clé Kp', le décodeur ne sera plus capable de décoder avec l'algorithme et devra être reconfiguré avec ces nouvelles données Kp', V'.

La clé de chiffrement est transmise par un lien protégé et/ou par une couche protocolaire liée au flux vidéo compressé selon une méthode connue de l'homme du métier.

La gestion du nouveau vecteur d'initialisation peut se faire par exemple au niveau image (i.e. changement de vecteur d'initialisation V image par image), par groupe d'images ou GOP, comme l'indique le brevet FR 1500564 ou encore par tout autre procédé connu de l'homme du métier.

Le procédé est par exemple utilisé dans un système comprenant un codeur et un décodeur mettant en oeuvre le standard vidéo H.264 ou encore le standard HEVC.

Le procédé offre notamment la possibilité de reconfigurer et de recréer dynamiquement un décodeur, de manière régulière, par exemple image par image, ce qui permet d'éviter des attaques cryptanalytiques qui chercheraient à comprendre et à récupérer l'algorithme de déchiffrement puisque ce système ne serait « présent » et fonctionnel qu'un instant unique donné. Le décodeur étant recompilé régulièrement, même si le décodeur est « aspiré » par une personne malveillante, son fonctionnement limité par la configuration de son vecteur d'initialisation et de sa clé de chiffrement ne lui permet pas de fonctionner correctement pour un autre flux chiffré à partir d'un autre vecteur d'initialisation.

## Revendications

1. Procédé de transmission vidéo sécurisé dans un système comportant au moins un décodeur de type reconfigurable (50) recevant un flux de données chiffrées Fc **caractérisé en ce qu'**il comporte au moins les étapes suivantes :
au niveau de l'étape de déchiffrement, pour chaque clé de chiffrement Kp et pour chaque vecteur d'initialisation utilisés V pour le chiffrement d'un flux de données, à partir d'une description du flux de données, générer un modèle d'instanciation (56) à partir d'outils de codage d'unités fonctionnelles FUs (52), au sein du décodeur et des bits reconnus comme chiffrés, reconfigurer ce modèle d'instanciation afin de générer un algorithme de déchiffrement et déchiffrer le flux de données chiffrées.

2. Procédé selon la revendication 1 **caractérisé en ce qu'**il comporte au moins les étapes suivantes : transmettre la clé de chiffrement Kp et le vecteur d'initialisation V à une étape de déchiffrement sélectif, prendre en compte des bits susceptibles d'être chiffrés en fonction dudit vecteur d'initialisation V et de ladite clé de chiffrement Kp, instancier un modèle d'instanciation à partir de la description des unités fonctionnelles FUs utilisées par ledit flux de données chiffré de manière sélective, de leur implémentation et des modules de déchiffrement sélectifs prenant en compte les bits reconnus comme chiffrés, transmettre le modèle d'instanciation à une étape de recompilation afin de générer un code logiciel, utiliser ledit code logiciel pour déchiffrer le flux de données F et reconstituer un flux vidéo déchiffré.

3. Procédé selon la revendication 1 **caractérisé en ce qu'**il comporte une étape préalable de chiffrement par groupes d'images du flux de données et pour chaque groupe d'image et pour chaque vecteur d'initialisation V associé au groupe d'images, et pour chaque groupe d'images la génération d'un module d'instanciation.

4. Procédé selon l'une des revendications 1 à 3 **caractérisé en ce que** l'on utilise un modèle de chiffrement H.264.

5. Procédé selon l'une des revendications 1 à 3 **caractérisé en ce que** l'on utilise un modèle de chiffrement HEVC.

6. Décodeur de type reconfigurable (50) recevant un flux de données chiffrées Fc et comprenant une première entrée (51) recevant la description DF du flux de données F qui transmet cette information à un module d'implémentation des unités fonctionnelles (52), une deuxième entrée (53) recevant une clé de chiffrement Kp utilisée pour un chiffrement sélectif du flux de données, une troisième entrée (54) recevant un vecteur d'initialisation pour le déchiffrement sélectif du flux de données, **caractérisé en ce que** ledit décodeur comporte un module de déchiffrement (55) adapté à prendre en compte lors du décodage des bits susceptibles d'être chiffrés en fonction du vecteur d'initialisation et de la clé de chiffrement et à instancier un modèle d'instanciation (56) à partir de la description des unités fonctionnelles utilisées par ce flux de données et de leur implémentation et des modules de déchiffrement sélectif prenant en compte les bits reconnus comme chiffrés, ledit modèle d'instanciation (56) est transmis à un module de recompilation (57) afin de générer un code logiciel utilisé comme décodeur vidéo déchiffrant (58) qui reçoit en entrée le flux de données F à déchiffrer et qui reconstituera alors une vidéo déchiffrée Fd.

7. Système **caractérisé en ce qu'**il comporte un décodeur selon la revendication 6 et un codeur de type H.264.

8. Système **caractérisé en ce qu'**il comporte un décodeur selon la revendication 6 et un codeur de type HEVC.
